# EUROPÄISCHE PATENTSCHRIFT

(11) **EP 1 344 636 B1**
(45) Veröffentlichungstag und Bekanntmachung des Hinweises auf die Patenterteilung: **17.01.2007**
(21) Anmeldenummer: 03004783.1
(22) Anmeldetag: 05.03.2003
(51) Int. Cl.: B29D 30/56, B29C 35/04

(54) **Verfahren zur Runderneuerung von Gummireifen und hierfür geeignete Vorrichtung**
Process and apparatus for retreading tyres
Procédé et dispositif pour le rechapage de pneumatiques

(30) Priorität: 15.03.2002 DE 10211541
(43) Veröffentlichungstag der Anmeldung: 17.09.2003
(73) Patentinhaber: Reifen-Ihle GmbH, 89312 Günzburg (DE)
(72) Erfinder: Ihle, Gerhard, 89312 Günzburg (DE)
(74) Vertreter: Munk, Ludwig

(56) Entgegenhaltungen:
- EP-A1- 0 399 942
- EP-A2- 0 323 164
- EP-A2- 0 372 921
- EP-A2- 0 919 349
- DE-A1- 2 224 177
- DE-A1- 2 252 555
- US-A- 4 310 374
- US-A- 4 547 241
- PATENT ABSTRACTS OF JAPAN Bd. 2000, Nr. 02, 29. Februar 2000 (2000-02-29) & JP 11 320567 A (BRIDGESTONE CORP), 24. November 1999 (1999-11-24)

## Beschreibung

Die Erfindung betrifft ein Verfahren zur Runderneuerung von Gummireifen, wobei wenigstens ein Rohling, der durch eine unter Zwischenschaltung von unvulkanisiertem Bindegummi mit einem Laufstreifen belegte Karkasse gebildet wird, in aufrechter Position in einem beheizbaren und mit Druck beaufschlagbaren Autoklaven behandelt wird, bis der Bindegummi auf dem ganzen Umfang vulkanisiert ist.

Die Erfindung betrifft ferner eine zur Durchführung dieses Verfahrens geeignete Vorrichtung.

Ein Verfahren und eine Vorrichtung dieser Art sind beispielsweise aus der EP 0399 942 A1 oder US 4547241 A bekannt.

Die Erfahrung mit der Vulkanisation in einem Autoklaven hat gezeigt, dass hier der Vulkanisationsprozess im unteren Bereich des aufgehängten Rohlings wesentlich mehr Zeit in Anspruch nimmt, als im oberen Bereich. Der Grund dafür ist darin zu sehen, dass sich während der Behandlung im Autoklaven im unteren Bereich des torusförmigen Innenraums der Karkasse vergleichsweise kalte Luft sammeln und in Folge eines fehlenden, lebhaften Luftaustausches auch lange halten kann. Der untere Rohlingbereich wird daher praktisch nur von außen beheizt, während in den sonstigen Bereichen durch die im Autoklaven zirkulierende Luft eine Beheizung von außen und innen erfolgt. Es dauert daher sehr lange, bis der Bindegummi auch im unteren Bereich der Karkasse seine Vulkanisationstemperatur erreicht hat. Da der Reifen im Autoklaven behandelt werden muss, bis auf dem gesamten Umfang eine Vulkanisation des Bindegummis stattgefunden hat, ergibt sich bisher zwangsläufig eine lange Behandlungsdauer. Die Folge davon sind ein hoher Energieverbrauch sowie eine geringe Durchsatzleistung des Autoklaven und damit eine schlechte Wirtschaftlichkeit. Ein weiterer Nachteil ist darin zu sehen, dass durch eine an den Verhältnissen im unteren Bereich des Rohlings orientierte, lange Behandlung im Autoklaven eine Schädigung der schneller vulkanisierten Bereiche eintreten kann. Dasselbe gilt für bei der sogenannten Kaltvulkanisation im Autoklaven zum Anpressen des Laufstreifens vielfach verwendete Gummistrümpfe bzw. Anpressbänder etc., was die Wirtschaftlichkeit weiter verschlechtern kann und zu einem Sicherheitsrisiko führt. Bisher hat die Fachwelt die genannten Nachteile in Kauf nehmen müssen.

Die EP 0919 349 A2 enthält ein Verfahren und eine Vorrichtung zum Vulkanisieren von Reifen in einer Heizpresse. Der Reifen wird dabei mittels eines über den Innenraum wirkenden flüssigen oder dampfförmigen Heizmediums beheizt. Bei Verwendung von Dampf bildet sich Kondensat, das sich im unteren Bereich des liegenden Reifens sammelt. Um eine Kühlwirkung des Kondensats zu vermeiden, wird dieses abgeführt. Bei der Verwendung einer Heizflüssigkeit ergibt sich infolge thermischen Auftriebs ein Temperaturgefälle zwischen unten und oben. Um dies zu vermeiden, wird die Heizflüssigkeit zirkuliert.

Hiervon ausgehend ist es die Aufgabe der vorliegenden Erfindung, ein Verfahren eingangs erwähnter Art mit einfachen und kostengünstigen Mitteln so zu verbessern, dass über dem Umfang des aufrecht positionierten Reifens eine weitgehend gleiche Vulkanisationszeit erreicht wird. Eine weitere Aufgabe der Erfindung besteht darin, eine hierfür geeignete Vorrichtung anzugeben.

Die vorstehend genannte Aufgabe wird im Zusammenhang mit dem eingangs erwähnten, gattungsgemäßen Verfahren dadurch gelöst, dass der torusförmige Innenraum der aufrecht positionierten Karkasse im unteren Bereich des Rohlings gesondert beheizt wird, wobei die hierfür benötigte Wärme von der dem Autoklaven zugeführten Wärme abgezweigt und von der von der Karkasse umfassten Durchgangsöffnung her in den unteren Bereich des torusförmigen Innenraums der Karkasse eingebracht wird.

Die hierfür geeignete erfindungsgemäße Vorrichtung enthält einen aus wärmeleitfähigem Material bestehenden Wärmeleitkörper, der mit seinem unteren Bereich zum Eingriff in den unteren Bereich des torusförmigen Innenraums der Karkasse bringbar ist und mit seinem oberen Bereich in die von der Karkasse umfasste Durchgangsöffnung hineinragt.

Aufgrund der gesonderten Beheizung des unteren Bereichs des torusförmigen Innenraums der Karkasse wird die dort vorhandene Kaltluft erwärmt, so dass eine Zirkulation und ein Luftaustausch zwischen der im torusförmigen Innenraum enthaltenen Luft und der im Autoklaven vorhandenen Luft stattfindet. Der untere Bereich des Rohlings wird dementsprechend, wie das auch in den weiter oben liegenden Bereichen der Fall ist, nicht nur von außen, sondern auch von innen mit Wärme beaufschlagt. Die Folge davon ist, dass die Vulkanisation überall gleich schnell erfolgt und daher die benötigte Behandlungszeit im Autoklaven gegenüber bisher verkürzt werden kann. Auf diese Weise werden nicht nur der Energieverbrauch reduziert und die Durchsatzleistung erhöht, sondern auch das Material geschont, was sich vorteilhaft auf die Erzielung einer guten Wirtschaftlichkeit sowie einer hohen Sicherheit auswirkt.

Der im unteren Bereich des torusförmigen Innenraums der Karkasse plazierbare, in die Durchgangsöffnung hineinragende Wärmeleitkörper stellt dabei eine Art Tauchsieder dar, dessen oberer Bereich durch die vorbeistreichende, im Autoklaven zirkulierende Luft erwärmt wird und der die aufgenommene Wärme infolge seiner Leitfähigkeit an seinen unteren Abschnitt abgibt, der hiermit die ihn umgebende Kaltluft erwärmt. Auf diese Weise wird keine zusätzliche Energiequelle benötigt. Vielmehr wird die zur gesonderten Beheizung des unteren Bereichs des torusförmigen Innenraums der Karkasse benötigte Energie von der dem Autoklaven zugeführten Wärme abgezweigt.

Vorteilhafte Ausgestaltungen und zweckmäßige Fortbildungen der übergeordneten Maßnahmen sind in den Unteransprüchen angegeben. So kann der Wärmeleitkörper zweckmäßig als in den unteren Bereich des torusförmigen Innenraums der Karkasse einstellbarer Stellkörper ausgebildet sein. Dies ermöglicht in vorteilhafter Weise eine manuelle Handhabung. Mechanische Einrichtungen sind dabei entbehrlich.

Eine weitere vorteilhafte Maßnahme kann darin bestehen, dass der Wärmeleitkörper mehrere, voneinander beabstandete Lamellen aufweist. Auf diese Weise ergeben sich eine vergleichsweise große Oberfläche und damit gute Wärmeaufnahme- und -abgabeeigenschaften.

Vorteilhaft kann der Wärmeleitkörper mit einem im oberen Bereich angeordneten Griff versehen sein. Dies erleichtert die manuelle Handhabbarkeit.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: einen Schnitt durch einen mit Reifenrohlingen bestückten Autoklaven,
- Figur 2: einen Schnitt durch einen mit einem erfindungsgemäßen Wärmeleitkörper bestückten Reifenrohling in gegenüber Figur 1 vergrößerter Darstellung und
- Figur 3: eine Ansicht einer bevorzugten Ausführung des Wärmeleitkörpers.

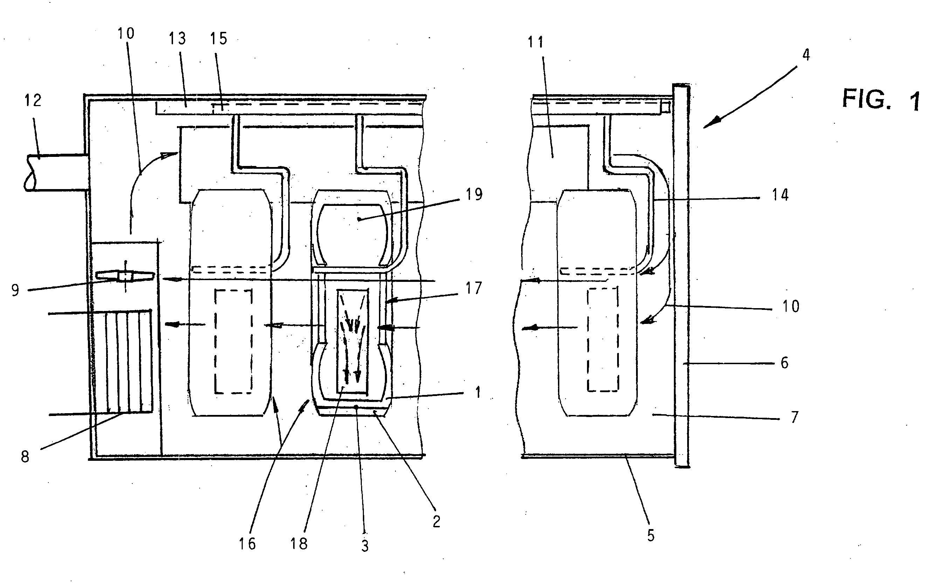

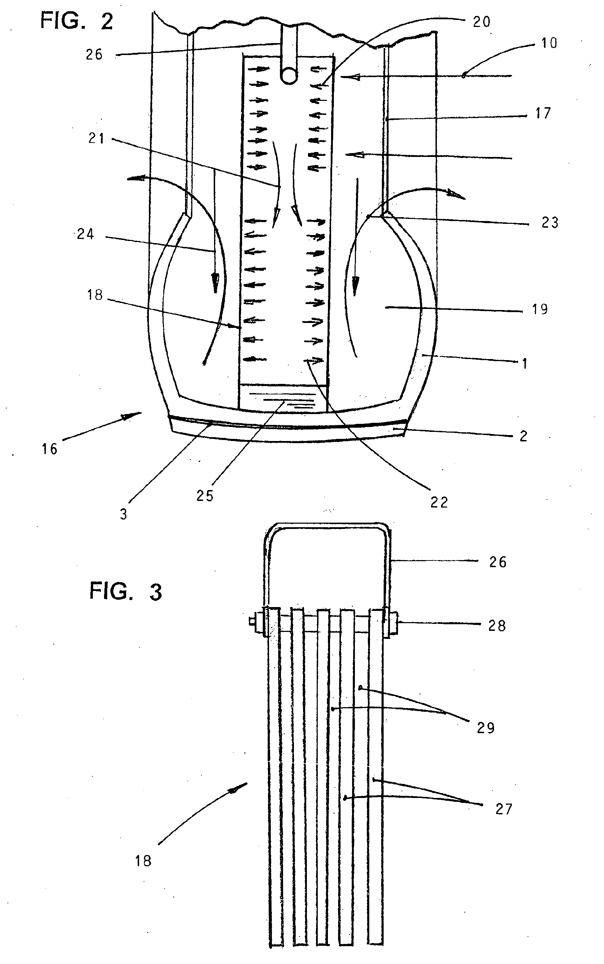

Bei der sogenannten Kaltvulkanisation wird ein bereits vorvulkanisierter Laufstreifen auf eine in geeigneter Weise vorbereitete Karkasse aufgebracht. Hierzu findet, wie in Figur 1 Mitte und Figur 2 angedeutet ist, ein in Form einer dünnen Lage zwischen die Karkasse 1 und den Laufstreifen 2 eingelegter, unvulkanisierter Bindegummi 3 Verwendung, der zur festen Verbindung des Laufstreifens 2 mit der Karkasse 1 vulkanisiert wird. Dieser Vulkanisiervorgang findet in einem Autoklaven 4 der der Figur 1 zugrundeliegenden Art statt.

Der der Figur 1 zugrundeliegende Autoklav 4 besteht aus einem fassförmigen Gehäuse 5, das an einer Stirnseite mit einem Schwenkdeckel 6 versehen ist und dessen Innenraum einen beheizbaren und mit Druck beaufschlagbaren Behandlunsraum 7 bildet. Die benötigte Temperatur liegt im Bereich zwischen 100 - 150° C. Der Druck liegt im Bereich zwischen 5 - 7 bar. Die Heizung erfolgt mittels eines im Behandlungsraum 7 angeordneten Heizaggregats 8, dem ein Ventilator 9 zugeordnet ist. Durch den Ventilator 9 wird eine durch Strömungspfeile 10 angedeutete Zirkulation der Luft im Behandlungsraum 7 bewirkt. Zur Luftführung können den oberen Scheitelbereich flankierende, axiale Luftschächte 11 vorgesehen sein. Die Druckbeaufschlagung erfolgt von außen, wie durch einen in den Behandlungsraum 7 mündenden Druckstutzen 12 angedeutet ist.

Im Scheitelbereich des Behandlungsraums 7 ist eine in axialer Richtung sich erstreckende Führungsschiene 13 angeordnet, in die eine mit Tragbügeln 14 versehene Tragschiene 15 einfahrbar ist. An den Tragbügeln 14 sind zur Vulkanisation vorbereitete Reifenrohlinge 16 aufgehängt, die jeweils durch eine unter Zwischenschaltung von unvulkanisiertem Bindegummi 3 mit einem Laufstreifen 2 belegte Karkasse 1 gebildet werden. Zum Anpressen des Laufstreifens 2 können hier nicht näher dargestellte Anpressmittel in Form eines umlaufendes Anpressbandes oder eines an eine Vakuumquelle anschließbaren Anpressstrumpfes Verwendung finden. Die Rohlinge 16 sind mit dem radial inneren, eine kreisförmige Durchgangsöffnung 17 begrenzenden Rand der Karkasse 1 auf einen horizontalen Tragarm des jeweils zugeordneten Tragbügels 14 aufgelegt. Die Rohlinge 16 befinden sich dementsprechend in einer aufrechten Position, in der ihre Achse etwa horizontal und damit parallel zur Längsachse des Autoklav-Gehäuses 5 verläuft.

Im unteren Bereich der mit liegender Achse hängend angeordneten Rohlinge 16 ist ein diesen jeweils zugeordneter, aus wärmeleitfähigem Material bestehender Wärmeleitkörper 18 vorgesehen, der außerhalb des Autoklaven 4 in den jeweils zugeordneten Rohling 16 eingebracht wird und während der Behandlung im Autoklaven 4 beim zugeordneten Rohling 16 verbleibt. Der Wärmeleitkörper 18 ist so ausgebildet und angeordnet, dass er von der Durchgangsöffnung 17 ausgehend mit seinem unteren Abschnitt in den unteren Bereich des torusförmigen Innenraums 19 der Karkasse 1 eingreift und mit seinem oberen Abschnitt in die Durchgangsöffnung 17 hineinragt.

Die im Behandlungsraum 7 zirkulierende Luft streift am in die Durchgangsöffnung 17 hineinragenden, oberen Abschnitt des Wärmeleitkörpers 18 vorbei, wodurch dieser erwärmt wird, wie in Figur 2 durch nach innen gerichtete Wärmepfeile 20 angedeutet ist. Die so aufgenommene Wärme wird innerhalb des Wärmeleitkörpers 18, wie durch Pfeile 21 angedeutet ist, nach unten geleitet und dort, wie durch nach außen gerichtete Wärmepfeile 22 angedeutet ist, an die Umgebung, das heißt an die im unteren Bereich des torusförmigen Innenraums 19 der Karkasse 1 vorhandene Kaltluft abgegeben.

Die auf diese Weise erwärmte Luft steigt, wie durch Pfeile 23 angedeutet ist, auf und vermischt sich außerhalb des torusförmigen Innenraums 19 mit der im Behandlungsraum 7 zirkulierenden Luft. Aus den oberen Bereichen des torusförmigen Innenraums 19 kann dementsprechend durch Pfeile 24 angedeutete Luft, die bereits vorgewärmt ist, nachdrängen. Es entsteht dementsprechend eine Zirkulation warmer Luft, die sicherstellt, dass auch im unteren Bereich der Rohlinge 16 eine gute Erwärmung des Bindegummis 3 von innen und außen her erfolgt, was eine schnelle Vulkanisation bewirkt. In den oberen Bereichen der Rohlinge 16 ist dies auch ohne Wärmeleitkörper der Fall, da die im torusförmigen Innenraum 19 eingeschlossene Luft aus den oberen Bereichen des Innenraums 19 im Gegensatz zu den unteren Bereichen schnell entweichen kann.

Der Wärmeleitkörper 18 ist hier, wie Figur 2 anschaulich erkennen lässt, als Stellkörper ausgebildet, der in den torusförmigen Innenraum 19 des zugeordneten Rohlings 16 eingestellt wird. Der untere Rand des Wärmeleitkörpers 18 kann als konvexe Rundung 25 ausgebildet sein deren Kontur der Innenkontur des umlaufenden Mantels der Karkasse 1 angepasst sein kann, wodurch eine große Auflagefläche erreicht und scharfe Anlagekanten vermieden werden. Im oberen Bereich des Wärmeleitkörpers 18 ist zur Bewerkstelligung einer manuellen Handhabbarkeit ein Henkelgriff 26 angebracht.

Der dem dargestellten Beispiel zugrundeliegende Wärmeleitkörper 18 besteht, wie aus Figur 3 hervorgeht, aus mehreren Lamellen 27, die mit gegenseitigem Abstand parallel hintereinander angeordnet sind. Im dargestellten Beispiel sind die Lamellen 27 im Bereich ihres oberen Endes auf einem durchgehenden Bolzen 28 aufgenommen, an dessen Enden der Henkelgriff 26 befestigt ist. Der Abstand der Lamellen 27 kann dabei einfach durch Beilagscheiben oder Distanzbuchsen etc. hergestellt werden. Die Lamellen 27 bestehen aus einem Material mit guter Wärmeleitfähigkeit. Aluminium ist gut geeignet. Zur Bildung der Lamellen 27 können daher einfach geeignete Zuschnitte eines Aluminiumblechs Verwendung finden.

Die Wärmeleitkörper 18 werden zweckmäßig so in den zugeordneten Rohling 16 eingestellt, dass die Lamellen 27 parallel zur Reifenachse bzw. Längsachse des Behandlungsraums 7 ausgerichtet sind, so dass die im Behandlungsraum 7 zirkulierende Luft gut die Spalte 29 zwischen den Lamellen 27 durchströmen kann, was zu einer guten Wärmeaufnahme führt. Die Breite der Lamellen und dementsprechend des Wärmeleitkörpers 18 ist kleiner als die lichte Weite des durchgangsöffnungsseitigen Eingangs des torusförmigen Innenraums 19. Der Überstand der Wärmeleitkörper 18 über den genannten Eingang in die Durchgangsöffnung 17 hinein ist kleiner als der Durchmesser der Durchgangsöffnung 17. Auf diese Weise wird die Handhabung der Wärmeleitkörper 18 erleichtert. Zweckmäßig können die Breite des Wärmeleitkörpers 18, wie im dargestellten Beispiel, zwischen 0,3 und 0,6 des Eingangs des Innenraums 19 und der Überstand zwischen 0,3 und 0,5 des Durchmessers der Durchgangsöffnung 17 liegen.

## Patentansprüche

1. Verfahren zur Runderneuerung von Gummireifen, wobei wenigstens ein Rohling (16) der durch eine unter Zwischenschaltung von unvulkanisiertem Bindegummi (3) mit einem Laufstreifen (2) belegte Karkasse (1) gebildet wird, in aufrechter Position in einem beheizbaren und mit Druck beaufschlagbaren Autoklaven (4) behandelt wird, bis der Bindegummi (3) auf dem ganzen Umfang vulkanisiert ist, **dadurch gekennzeichnet, dass** der torusförmige Innenraum (19) der aufrecht positionierten Karkasse (1) im unteren Bereich des Rohlings (16) gesondert beheizt wird, wobei die hierfür benötigte Wärme von der dem Autoklaven zugeführten Wärme abgezweigt und von der von der Karkasse (1) umfassten Durchgangsöffnung (17) her in den unteren Bereich des torusförmigen Innenraums (19) der Karkasse (1) eingebracht wird.

2. Verfahren nach Anspruch 1, **dadurch gekennzeichnet, dass** im unteren Bereich des torusförmigen Innenraums (19) der Karkasse (1) vor dem Schließen des Autoklaven (4) wenigstens ein Wärmeleitkörper (18) plaziert wird, mittels dessen der im Autoklaven (4) zirkulierenden Warmluft Wärme entzogen und in den unteren Bereich des torusförmigen Innenraums (19) der Karkasse (1) eingeleitet wird.

3. Vorrichtung zur Durchführung des Verfahrens nach einem der vorhergehenden Ansprüche, **gekennzeichnet durch** wenigstens einen aus wärmeleitfähigem Material bestehenden Wärmeleitkörper (18) der mit seinem unteren Bereich zum Eingriff in den unteren Bereich des torusförmigen Innenraums (19) der Karkasse (1) bringbar ist, und mit seinem oberen Bereich in die von der Karkasse (1) umfasste Durchgangsöffnung (17) hineinragt.

4. Vorrichtung nach Anspruch 3, **dadurch gekennzeichnet, dass** der Wärmeleitkörper (18) als in den unteren Bereich des torusförmigen Innenraums (19) der Karkasse (1) einstellbarer Stellkörper ausgebildet ist.

5. Vorrichtung nach Anspruch 3 oder 4, **dadurch gekennzeichnet, dass** der Wärmeleitkörper (18) mehrere, mit Abstand parallel hintereinander angeordnete Lamellen (27) aufweist.

6. Vorrichtung nach einem der Ansprüche 3 - 5, **dadurch gekennzeichnet, dass** die Lamellen (27) parallel zur Reifenachse angeordnet sind.

7. Vorrichtung nach einem der Ansprüche 3 - 6, **dadurch gekennzeichnet, dass** der Wärmeleitkörper (18) mit einem im oberen Bereich angeordneten Griff (26) versehen ist.

8. Vorrichtung nach einem der Ansprüche 3 - 7, **dadurch gekennzeichnet, dass** der untere Rand des Wärmeleitkörpers (18) entsprechend der Innenkontur des Mantels der Karkasse (1) konvex ausgebildet ist.

9. Vorrichtung nach einem der Ansprüche 3 - 8, **dadurch gekennzeichnet, dass** der Überstand des Wärmeleitkörpers (18) über den unteren, radial inneren Randbereich der Karkasse (1) kleiner als der Durchmesser der von der Karkasse (1) umfassten Durchgangsöffnung (17) ist und dass die reifenachsparallele Erstreckung des Wärmeleitkörpers (18) kleiner als die lichte Weite des durchgangsöffnungsseitigen Eingangs des torusförmigen Innenraums (19) der Karkasse (1) ist.

## Claims

1. A process for retreading rubber tyres, in which at least one blank (16) formed by a carcass or casing (1) fitted with a running strip (2) with a layer of unvulcanised bonding rubber (3) sandwiched therebetween, is treated in an upright position in a heatable and pressurised autoclave (4) until the bonding rubber (3) is vulcanised around the entire circumference, **characterised in that** the torus-shaped interior (19) of the upright casing (1) is separately heated in the lower region of the blank (16), with the heat required for such separate heating being branched off from the heat supplied to the autoclave, and fed from the through opening (17) encompassed by the casing (1) to the lower range of the torus-shaped interior (19) of the casing (1).

2. A process as claimed in claim 1 **characterised in that**, before closing the autoclave (4), at least one heat conducting body (18) is placed in the lower range of the torus-shaped interior (19) of the casing (1), with the aid of which heat is absorbed from the hot air circulating in the autoclave (4) and fed into the lower range of the torus-shaped interior (19) of the casing (1).

3. A device for the implementation of the process defined in any of the preceding claims **characterised by** at least one heat conducting body (18) consisting of a heat conducting material, whose lower section can be put into the lower range of the torus-shaped interior (19) of the casing (1) and whose upper section projects into the through opening (17) encompassed by the casing (1).

4. A device as claimed in claim 3 **characterised in that** the heat conducting body (18) is designed as an object that can be introduced into and positioned in the lower section of the torus-shaped interior (19) of the casing (1).

5. A device as claimed in claim 3 or 4 **characterised in that** the heat conducting body (18) comprises a plurality of lamellae (27) spaced from one another and arranged parallel one behind the other.

6. A device as claimed in any of the claims 3 to 5 **characterised in that** the lamellae (27) are arranged parallel to the tyre axis.

7. A device as claimed in any of the claims 3 to 6 **characterised in that** the heat conducting body (18) is in its upper section provided with a handle (26).

8. A device as claimed in any of the claims 3 to 7 **characterised in that** the lower rim of the heat conducting body (18) is of convex configuration to match the internal contour of the casing (1).

9. A device as claimed in any of the claims 3 to 8 **characterised in that** the length of protrusion of the heat conducting body (18) beyond the lower, radially inward rim area of the casing (1) is smaller than the diameter of the through opening (17) encompassed by the casing (1) and that the extension of the heat conducting body (18) in a direction parallel to the tyre axis is smaller than the clear width of the through opening-side entry of the torus-shaped interior (19) of the casing (1).

## Revendications

1. Procédé de rechapage de pneumatiques, au moins une ébauche (16) qui est formée d'une carcasse (1) revêtue d'une bande de roulement (2) en intercalant du caoutchouc de liaison non vulcanisé (3) étant traitée en position debout dans un autoclave (4) qui peut être chauffé et mis en pression, jusqu'à ce que ledit caoutchouc de liaison (3) soit vulcanisé sur l'ensemble de la circonférence, **caractérisé par le fait que** l'intérieur torique (19) de la carcasse (1) positionnée debout, qui est situé dans la zone inférieure de l'ébauche (16) est chauffé séparément, la chaleur y requise étant prélevée sur la chaleur amenée à l'autoclave et étant introduite dans la zone inférieure de l'intérieur torique (19) de la carcasse (1) depuis l'ouverture de passage (17) entourée de ladite carcasse (1).

2. Procédé selon la revendication 1, **caractérisé par le fait qu'**au moins un corps conducteur de chaleur (18) est placé dans la zone inférieure de l'intérieur torique (19) de la carcasse (1) avant de fermer l'autoclave (4), ledit corps conducteur de chaleur servant à enlever de la chaleur à l'air chaud circulant dans l'autoclave (4) et à introduire celle-ci dans la zone inférieure de l'intérieur torique (19) de la carcasse (1).

3. Dispositif pour la mise en oeuvre du procédé selon l'une des revendications précédentes, **caractérisé par** au moins un corps conducteur de chaleur (18) réalisé dans un matériau à conductibilité thermique dont la zone inférieure peut être mise en prise dans la zone inférieure de l'intérieur torique (19) de la carcasse (1) et dont la zone supérieure se projette dans l'ouverture de passage (17) entourée de la carcasse (1).

4. Dispositif selon la revendication 3, **caractérisé par le fait que** ledit corps conducteur de chaleur (18) est réalisé en tant que corps debout qui peut être placé dans la zone inférieure de l'intérieur torique (19) de la carcasse (1).

5. Dispositif selon la revendication 3 ou 4, **caractérisé par le fait que** ledit corps conducteur de chaleur (18) présente plusieurs lamelles (27) disposées à distance parallèlement les unes derrières les autres.

6. Dispositif selon l'une des revendications 3 à 5, **caractérisé par le fait que** les lamelles (27) sont disposées parallèlement à l'axe du pneu.

7. Dispositif selon l'une des revendications 3 à 6, **caractérisé par le fait que** ledit corps conducteur de chaleur (18) est pourvu d'une poignée (26) qui est disposée dans la zone supérieure.

8. Dispositif selon l'une des revendications 3 à 7, **caractérisé par le fait que** le bord inférieur du corps conducteur de chaleur (18) est réalisé, suivant le contour intérieur de l'enveloppe de la carcasse (1), de façon convexe.

9. Dispositif selon l'une des revendications 3 à 8, **caractérisé par le fait que** la partie du corps conducteur de chaleur (18) qui dépasse la zone marginale inférieure radialement intérieure de la carcasse (1) est inférieure au diamètre de l'ouverture de passage (17) entourée de la carcasse (1), et que l'extension parallèle à l'axe du pneu, du corps conducteur de chaleur (18) est inférieure à la largeur intérieure de l'entrée de l'intérieur torique (19) de la carcasse (1), qui est située du côté de l'ouverture de passage.
